# EUROPÄISCHE PATENTSCHRIFT

(11) **EP 1 792 797 B1**
(45) Veröffentlichungstag und Bekanntmachung des Hinweises auf die Patenterteilung: **25.12.2013**
(21) Anmeldenummer: 06123953.9
(22) Anmeldetag: 13.11.2006
(51) Int. Cl.: B60T 8/26, B60T 8/00, F16D 65/00

(54) **Verfahren zur Vermeidung des Bremsenknarzens**
Method for preventing brake squeal
Procédé pour eviter le couinement des freins

(30) Priorität: 30.11.2005 DE 102005056985
(43) Veröffentlichungstag der Anmeldung: 06.06.2007
(73) Patentinhaber: Bayerische Motoren Werke Aktiengesellschaft, 80809 München (DE)
(72) Erfinder: Toelge, Thomas, 80993 München (DE)

(56) Entgegenhaltungen:
- EP-A2- 0 816 195
- WO-A-2005/016718
- WO-A-2006/005446
- DE-A1- 10 248 852
- DE-A1- 19 941 482
- GB-A- 1 012 611
- US-A1- 2004 212 246

## Beschreibung

Die Erfindung betrifft ein Verfahren zur Vermeidung von Bremsenknarzen, insbesondere beim geregelten Abbremsen eines Kraftfahrzeugs, nach dem Oberbegriff des Anspruchs 1.

Bei Kraftfahrzeugen kann beim Betätigen der Betriebsbremse, vorwiegend beim Bremsen während der Fahrt mit Kriechgeschwindigkeit nach einem Stillstand des Kraftfahrzeugs, Bremsenknarzen auftreten, verursacht durch Schwingungen in Radbremse, Fahrwerk und/oder Karosserie. Stick-Slip-Effekte bringen die Radbremse in eine Starrkörperschwingung, die weitere Schwingungen anregen kann. Die Fahrgeschwindigkeit, bei der solche Schwingungen auftreten, liegt im wesentlichen zwischen 0 und 5 km/h. Störend kann die akustische Wahrnehmbarkeit im Fahrzeug empfunden werden.

Dass bei Bremsanlagen für Kraftfahrzeuge, insbesondere mit Scheibenbremsen und insbesondere bei der Fahrt des abgebremsten Kraftfahrzeugs in Kriechgeschwindigkeit nach einem Stillstand, in einem bestimmten, wiederum für jeden speziellen Kraftfahrzeugtyp speziellen Referenzbereich der Fahrgeschwindigkeit, ein so genanntes Bremsenknarzen auftreten kann, ist bereits bekannt. Hiervon sind vor allem Kraftfahrzeuge mit Automatikgetriebe mit Drehmomentwandler betroffen, da diese beim Stillstand in Fahrstufe D mit einem gewissen Antriebsdrehmoment beaufschlagt sind und dadurch zum Kriechen neigen. Dies ist auch in der DE 103 12 545 A1 beschrieben, wo auch unter anderem ein Verfahren zur Vermeidung von Bremsenknarzen aufgezeigt ist, nämlich beim Abbremsen eines Kraftfahrzeugs, mit als Reibungsbremsen ausgebildeten Radbremsen, das von einem Steuergerät vorgegebene notwendige Gesamtbremsmoment zur Abbremsung so zwischen Vorderund Hinterachse aufzuteilen, dass ein Bereich von Bremsdrücken, der Bremsenknarzen verursacht, nicht zur Anwendung kommt.

Die US 2004/0212246 A1 beschreibt hingegen ein Kraftfahrzeugbremssystem zur Verhinderung von Bremsgeräuschen, das für alle Geschwindigkeitsbereiche vorgesehen ist. Es wird an jedem Bremssattel ein Sensor eingesetzt, der ein auftretendes Bremsgeräusch detektiert. Danach wird von der Bremskraft des Rades, dessen Bremse das Geräusch verursacht, ein bestimmter, in einem Steuergerät hinterlegter Bremskraftbetrag abgezogen und dieser Bremskraftbetrag zu der Bremskraft eines anderen Rades, je nach Ausführungsform diagonal zu oder in Längsrichtung vor oder hinter dem Bremsgeräusch verursachenden Rad liegend, hinzu addiert. So bleibt die Gesamtbremskraft konstant und die Bremskraft am das Bremsgeräusch verursachenden Rad wird verändert, in der Annahme, dass dadurch das Bremsgeräusch beendet wird. Geben mehrere Räder Bremsgeräusche ab, wird deren Bremskraft nacheinander auf die beschriebene Weise beeinflusst. Als Aufgabe wird erwähnt, dass unerwünschtes Fahrverhalten vermieden werden soll, auch wenn an einzelnen Rädern zur Bremsgeräuschverhinderung die Bremskraft verändert wird.

Dieses Kraftfahrzeugbremssystem ist zur Verhinderung von Bremsgeräuschen über den gesamten Geschwindigkeitsbereich konzipiert, dazu sollte sich das Fahrverhalten des Kraftfahrzeugs aufgrund einer Bremsgeräuschverhinderung nicht wesentlich ändern. Im Falle des Auftretens von Bremsgeräuschen laufend durchzuführende Berechnungsroutinen machen das Verfahren sehr aufwändig und kompliziert.

Aufgabe dieser Erfindung ist es, ein Verfahren für ein Kraftfahrzeug bereitzustellen, mit dem, bei als Reibungsbremsen ausgebildeten Radbremsen, Maßnahmen zur Vermeidung von Bremsenknarzen, insbesondere im geregelten Bremsenbetätigungsbereich, zur Anwendung kommen.

Die Aufgabe wird erfindungsgemäß mit den Verfahrensschritten des Anspruchs 1 gelöst. Weitere Ausgestaltungen der Erfindung ergeben sich aus den abhängigen Ansprüchen.

Nach der Erfindung kommt ein Verfahren zur Vermeidung des Bremsenknarzens während eines an einer geregelten Abbremsung anschließenden Kriechens eines Kraftfahrzeugs mit als Reibungsbremsen ausgebildeten Radbremsen zur Anwendung, wobei in einem Teilfahrgeschwindigkeitsbereich, in dem Bremsenknarzen auftritt, das von einem Steuergerät vorgegebene notwendige Gesamtbremsmoment zur Abbremsung zwischen Vorder- und Hinterachse zur Vermeidung des Bremsenknarzens aufgeteilt wird. Dabei ist der Teilfahrgeschwindigkeitsbereich in dem Bremsenknarzen auftritt im Steuergerät hinterlegt und im Fahrgeschwindigkeitsbereich zwischen null und fünf km/h wird nach einer Abbremsung zum Stillstand des Kraftfahrzeugs, das vom Steuergerät zuletzt vorgegebene Gesamtbremsmoment entweder über die Vorderachse oder über die Hinterachse aufgebracht.

Durch ein solches Verfahren kann vorteilhafterweise mit sehr geringem Aufwand und geringen Kosten eine Betriebsmöglichkeit der Bremsanlage hinzugefügt werden, die dem beschriebenen Bremsenknarzen gerade dann entgegenwirkt, wenn es häufig auftritt, nämlich bei nicht vom Fahrer gesteuerten Bremsungen, zum Beispiel wenn die notwendige Bremsverzögerung durch das Steuergerät aus Signalen eines Abstands- und/oder Fahrgeschwindigkeitsregelsystems hergeleitet wird. Dabei sollte der Teilfahrgeschwindigkeitsbereich im wesentlichen zwischen null und fünf km/h liegen. Dieser Bereich wird vorteilhafterweise für jeden Fahrzeugtyp spezifisch ermittelt oder festgelegt als der Bereich, in dem Bremsenknarzen auftritt und im Steuergerät hinterlegt, was ermöglicht, durch einen einfachen Vergleich von Sensormesssignalen mit den abgespeicherten Werten Bremsenknarzen zu verhindern. Alternativ dazu kann natürlich das Bremsenknarzen auch durch einen Sensor, zum Beispiel durch ein Mikrofon oder einen Schwingungsmesser ermittelt werden, der ein Signal an das Steuergerät weiterleitet.

Weitere bevorzugte Ausführungsformen der Erfindung sehen vor, dass nach einem erstmaligen Stillstand des Kraftfahrzeugs das Gesamtbremsmoment über die angetriebene Achse aufgebracht wird. Dadurch wird verhindert, dass sich Antriebsmoment und Bremsmoment gegeneinander sozusagen über die Karosserie verspannen, was bei nachfolgender Fahrt mit Kriechgeschwindigkeit Bremsenknarzen verursachen kann.

Wenn allerdings die Bremskraft der gebremsten Achse nicht mehr ausreicht, das Fahrzeug im Stillstand zu halten, so sieht eine weitere bevorzugte Ausführungsform vor, dass bei durch eine Achse aufgebrachtem maximalem Gesamtbremsmoment und einer Fahrgeschwindigkeit ungleich null, das Steuergerät Eingangssignale von einer Roll- und Rutscherkennung erhält, die dieses veranlassen, die bis dahin ungebremste Achse mit Bremsmoment so zu beaufschlagen, dass das Kraftfahrzeug zum Stillstand kommt.

Durch diese vorteilhaften Ausführungsformen der Erfindung kann ebenfalls mit sehr geringem Aufwand und geringen Kosten dem beschriebenen Bremsenknarzen entgegengewirkt werden.

Im besonderen kann die Bremsanlage für ein Kraftfahrzeug nach der Erfindung mindestens ein ESP-Regelsystem besitzen, das die Steuereinrichtung für das Aufbringen der unterschiedlichen Bremsdrücke bildet.

Außerdem kann die Betätigungskraft für die Radbremsen pneumatisch, hydraulisch oder durch elektromotorisch betriebene Aktuatoren aufgebracht werden.

Die Bremsmomentenverteilung zwischen Vorderachse und Hinterachse kann mit abnehmender Fahrgeschwindigkeit kontinuierlich oder in Stufen in Richtung auf eine Achse verschoben werden. Weitere Einflussgröße kann das für die vom System geforderte Verzögerung normal notwendige Bremsdruckniveau sein. Erst wenn ein bestimmter Druckbereich gehalten wird, soll die Verschiebung aktiv werden. Außerdem kann die Bremsmomentenverteilung zwischen Vorderachse und Hinterachse automatisch geändert werden oder auch nur dann, wenn durch geeignete Sensoren Bremsenknarzen festgestellt wird.

Ein bevorzugtes Ausführungsbeispiel der Erfindung ist in der nachfolgenden Beschreibung und der zugehörigen Zeichnung näher dargestellt. Es zeigen:
- Figur 1:: ein Blockschaltbild eines Ausführungsbeispiels einer erfindungsgemäßen Bremsanlage und
- Figur 2:: ein Bremsdruck-Fahrgeschwindigkeitsdiagramm mit einer eingezeichneten möglichen Bremsdruckaufteilung zwischen Vorder- und Hinterachse durch eine Bremsanlage gemäß der Erfindung.

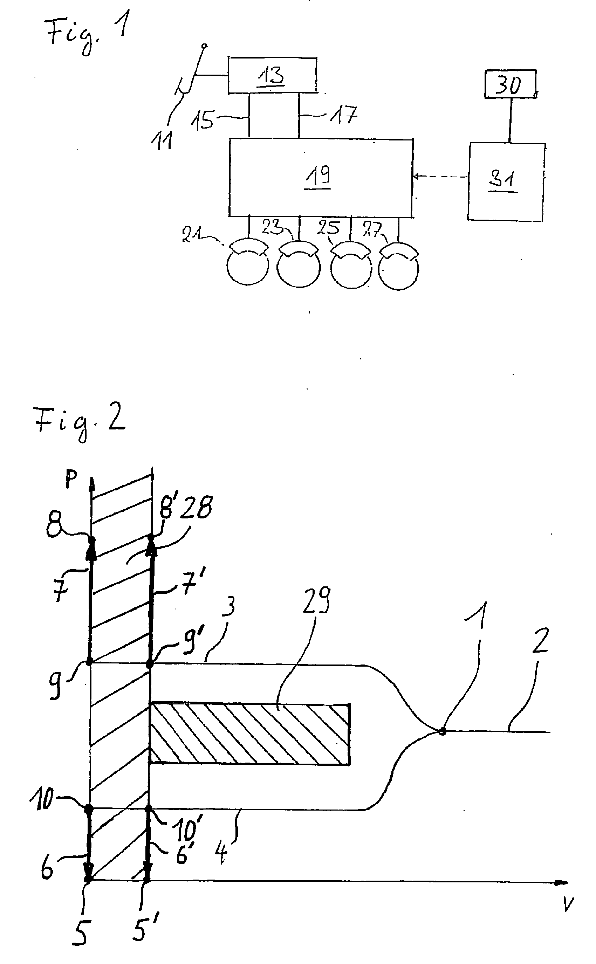

Figur 1 zeigt eine Bremsanlage für ein nicht näher dargestelltes Fahrzeug mit Reibungsbremsen für jedes Rad. Die Bremsanlage ist in an sich bekannter Weise als hydraulische Reibungsbremsanlage oder elektrohydraulische Reibungsbremsanlage aufgebaut und verfügt über zwei Bremskreise, einen Vorderachskreis mit den Radbremseinrichtungen 21 und 23 und einen Hinterachskreis mit den Radbremseinrichtungen 25 und 27. Außerdem besitzt die Bremsanlage eine als Bremspedal 11 ausgebildete Bremsenbetätigungseinrichtung, die mechanisch einen Hauptbremszylinder 13 betätigt, der über eine erste Ausgangsleitung 15 des Vorderachsbremskreises und eine zweite Ausgangsleitung 17 des Hinterachsbremskreises mit einem Hydraulikaggregat 19 hydraulisch verbunden ist. An das Hydraulikaggregat 19 sind die vier Radbremseinrichtungen 21, 23, 25, 27 des Fahrzeugs angeschlossen, so dass der Bremsdruck in den Radbremseinrichtungen 21, 23, 25, 27 Rad individuell über das Hydraulikaggregat 19 eingestellt werden kann.

Der genaue Aufbau des Hydraulikaggregates 19 ist dem Fachmann aus in modernen Fahrzeugen üblichen hydraulischen oder elektrohydraulischen Bremsanlagen bekannt, die Fahrstabilitätsregelungen (z.B. ESP), Antiblockierregelungen (ABS) oder Antriebsschlupfregelungen (ASR) aufweisen. Daher wird der genaue Aufbau an dieser Stelle nicht weiter erläutert.

Eine Steuereinrichtung im Steuergerät 31 steuert die Radbremseinrichtungen 21, 23, 25, 27 so an, dass für die Radbremsen die notwendige Bremsverzögerung vorhanden ist, für geregeltes Abbremsen entsprechend den Signalen, die von einem Abstandsregelsystem 30 an das Steuergerät 31 abgegeben werden. Dabei kommt eine Einrichtung zur Vermeidung des Bremsenquietschens und des Bremsenknarzens zum Einsatz, die das von dem Steuergerät 31 vorgegebene notwendige Gesamtbremsmoment zur Abbremsung so zwischen den Radbremskreisen der Vorder- und Hinterachse aufteilt, dass ein bestimmter Bereich von Bremsdrücken, in dem Bremsenquietschen auftritt, nicht zur Anwendung kommt. Bei dieser Steuerung fließt auch der Fahrgeschwindigkeitsbereich, in dem Bremsenquietschen auftritt, mit in die Berechnungen ein. Die Bereiche der Fahrgeschwindigkeit und des Bremsdrucks, in denen Bremsenquietschen und Bremsenknarzen auftritt, wurden fahrzeugtypspezifisch ermittelt oder festgelegt und sind im Steuergerät 31 hinterlegt. Zumindest für Personenkraftwagen liegt für Bremsenquietschen der bestimmte Fahrgeschwindigkeitsbereich im wesentlichen zwischen null und vierzig km/h und der bestimmte Bremsdruckbereich entspricht den Bremsdrücken, die zur Erzielung von Bremsverzögerungen im wesentlichen bis 3 m/s² notwendig sind. Bremsenknarzen tritt dagegen vorwiegend beim Fahren mit Kriechgeschwindigkeit, nach vorherigem Stillstand, im Fahrgeschwindigkeitsbereich von null bis 5 km/h auf.

Figur 2 zeigt dazu als Beispiel ein Bremsdruck-Fahrgeschwindigkeitsdiagramm mit einer eingezeichneten möglichen Bremsdruckaufteilung im Falle von Bremsenquietschen und Bremsenknarzen durch die Steuereinrichtung im Steuergerät 31. Im schraffierten Bereich 29 der Werte für Fahrgeschwindigkeit und Bremsdruck besteht fahrzeugtypspezifisch die Möglichkeit, dass Bremsenquietschen auftritt. Die Werte dieses Bereichs wurden fahrzeugtypspezifisch ermittelt und sind im Steuergerät 31 hinterlegt. Bei einer Bremsung, deren notwendige Bremsverzögerung für geregeltes Abbremsen aus Signalen des Abstandsregelsystems 30 hergeleitet wird, wird der schraffierte Bereich 29 von Werten für Fahrgeschwindigkeit und Bremsdruck dadurch umgangen, dass beim Erreichen des Punktes 1 das Steuergerät 31 über das Hydraulikaggregat 19 an der Hinterachse den Bremsdruck absenkt und der Bremsdruck an der Vorderachse entsprechend angehoben wird und zwar so, dass insgesamt die notwendige Bremsverzögerung erhalten bleibt. Die Bremsdruck-Fahrgeschwindigkeitskennlinie für beide Bremskreise 2 wird durch die Steuereinrichtung des Steuergeräts 31 deshalb am Punkt 1 aufgespalten in eine Bremsdruck-Fahrgeschwindigkeitskennlinie 3 für den Vorderachsbremskreis und eine Bremsdruck-Fahrgeschwindigkeitskennlinie 4 für den Hinterachsbremskreis. Die Bremsung wird mit diesen Werten bis zum Stillstand des Kraftfahrzeugs durchgeführt bis zu den Kennlinienpunkten 9 bzw. 10.

Um zu verhindern, dass bei nachfolgendem Kriechen des Kraftfahrzeugs Bremsenknarzen auftritt, wird die Bremsdruckaufteilung durch die Steuereinrichtung im Steuergerät 31 weiter verändert. Im weiteren schraffierten Bereich 28 der Werte für Fahrgeschwindigkeit und Bremsdruck besteht fahrzeugtypspezifisch die Möglichkeit, dass Bremsenknarzen auftritt. Die Werte dieses Bereichs wurden ebenfalls fahrzeugtypspezifisch ermittelt und sind im Steuergerät 31 hinterlegt. Die Einrichtung zur Vermeidung des Bremsenknarzens teilt das vom Steuergerät 31 vorgegebene notwendige Gesamtbremsmoment zur Festbremsung zwischen den Radbremsen der Vorder- und Hinterachse nun so auf, dass das Gesamtbremsmoment über die Vorderachse aufgebracht wird. Dazu wird vom Steuergerät 31 der Bremsdruck im Hinterachskreis, dargestellt durch einen Pfeil 6 auf der Bremsdruck-Fahrgeschwindigkeitskennlinie 4, vom Punkt 10 zum Punkt 5 auf null abgesenkt. Dagegen wird der Bremsdruck im Vorderachskreis, dargestellt durch einen Pfeil 7 auf der Bremsdruck-Fahrgeschwindigkeitskennlinie 3, vom Punkt 9 zum Punkt 8 erhöht. So kann man eine Achse entlasten und die gegen Bremsenknarzen unempfindlichere Achse mit Druck beaufschlagen. Wählt man die angetriebene Achse eines Kraftfahrzeugs als gebremste Achse, so verhindert man, dass sich Antriebsmoment und Bremsmoment gegeneinander über die Karosserie sozusagen verspannen und dadurch bei nachfolgender Fahrt mit Kriechgeschwindigkeit Bremsenknarzen verursacht wird.

Alternativ dazu ist es auch möglich, dass die Einrichtung zur Vermeidung des Bremsenknarzens das vom Steuergerät 31 vorgegebene notwendige Gesamtbremsmoment zur Festbremsung zwischen den Radbremsen der Vorder- und Hinterachse schon vor dem ersten Stillstand des Kraftfahrzeugs so aufteilt, dass das Gesamtbremsmoment über die Vorderachse aufgebracht wird. Entsprechend wird dann beim Erreichen der geringen, fahrzeugtypspezifisch festgelegten und im Steuergerät 31 im Kennfeld des weiteren schraffierten Bereichs 28 abgespeicherten Geschwindigkeit der Punkte 9' und 10' vom Steuergerät 31 der Bremsdruck im Hinterachskreis, dargestellt durch einen Pfeil 6' auf der Bremsdruck-Fahrgeschwindigkeitskennlinie 4, vom Punkt 10' zum Punkt 5' auf null abgesenkt. Dagegen wird der Bremsdruck im Vorderachskreis, dargestellt durch einen Pfeil 7' auf der Bremsdruck-Fahrgeschwindigkeitskennlinie 3, vom Punkt 9' zum Punkt 8' erhöht. Idealerweise wählt man bei einachsig angetriebenen Kraftfahrzeugen die angetriebene Achse als stärker gebremste Achse aus, da dies verhindert, dass sich Antriebsmoment und Bremsmoment gegeneinander über die Karosserie sozusagen verspannen und dadurch bei Fahrt mit Kriechgeschwindigkeit Bremsenknarzen verursacht wird.

## Patentansprüche

1. Verfahren zur Vermeidung des Bremsenknarzens während eines an einer geregelten Abbremsung anschliessenden Kriechens eines Kraftfahrzeugs mit als Reibungsbremsen ausgebildeten Radbremsen, wobei in einem Teilfahrgeschwindigkeitsbereich in dem Bremsenknarzen auftritt, das von einem Steuergerät (31) vorgegebene notwendige Gesamtbremsmoment zur Abbremsung zwischen Vorder- und Hinterachse zur Vermeidung des Bremsenknarzens aufgeteilt. wird, wobei der Teilfahrgeschwindigkeitsbereich in dem Bremsenknarzen auftritt im Steuergerät hinterlegt ist, und wobei im Fahrgeschwindigkeitsbereich zwischen null und fünf km/h nach einer Abbremsung des Kraftfahrzeugs zum Stillstand das vom Steuergerät zuletzt vorgegebene Gesamtbremsmoment entweder über die Vorderachse oder über die Hinterachse aufgebracht wird.

2. Verfahren nach Anspruch 2, **dadurch gekennzeichnet, dass** das Gesamtbremsmoment über die angetriebene Achse aufgebracht wird.

3. Verfahren nach Anspruch 1 oder 2, **dadurch gekennzeichnet, dass** eine notwendige Bremsverzögerung durch das Steuergerät (31) aus Signalen eines Abstands- und/oder Fahrgeschwindigkeitsregelsystems (30) hergeleitet wird.

4. Verfahren nach einem der Ansprüche 1 bis 3, **dadurch gekennzeichnet, dass** der bestimmte Teilfahrgeschwindigkeitsbereich fahrzeugtypspezifisch ermittelt oder festgelegt ist.

5. Verfahren nach einem der Ansprüche 1 bis 4, **dadurch gekennzeichnet, dass** bei durch eine Achse aufgebrachtem maximalem Gesamtbremsmoment und einer Fahrgeschwindigkeit ungleich null, das Steuergerät (31) Eingangssignale von einer Roll- und Rutscherkennung erhält, die dieses veranlassen, die bis dahin ungebremste Achse mit Bremsmoment so zu beaufschlagen, dass das Kraftfahrzeug zum Stillstand kommt.

## Claims

1. A method for avoiding brake squeal while a motor vehicle is crawling following a controlled deceleration, with wheel brakes configured as friction brakes, wherein, in a part driving speed range in which brake squeal occurs, the total braking torque necessary for deceleration predetermined by a control device (31) is divided between the front and rear axle to avoid brake squeal, wherein the part driving speed range in which brake squeal occurs is stored in the control device, and wherein in the driving speed range between zero and five km/h, after a deceleration of the motor vehicle to a standstill, the total braking torque last predetermined by the control device is applied either by means of the front axle or the rear axle.

2. A method according to claim 2, **characterised in that** the total braking torque is applied by means of the driven axle.

3. A method according to claim 1 or 2, **characterised in that** a necessary braking delay is derived by the control device (31) from signals of a distance and/or cruise control system (30).

4. A method according to any one of claims 1 to 3, **characterised in that** the specific part driving speed range is determined or fixed specifically for the type of vehicle.

5. A method according to any one of claims 1 to 4, **characterised in that** at a maximum total braking torque applied by an axle and a driving speed not equal to zero, the control device (31) receives input signals from a rolling or skidding recognition mechanism, which cause it to apply a braking torque to the axle that was unbraked until then in such a way that the motor vehicle comes to a standstill.

## Revendications

1. Procédé permettant d'éviter le grincement des freins pendant le relâchement d'un véhicule suivant un freinage régulé, comportant des freins de roue réalisés sous la forme de freins à friction, selon lequel, dans une plage de vitesses de déplacement partielles du véhicule dans laquelle un grincement des freins se produit, le couple de freinage total nécessaire pour le freinage prédéfini par un appareil de commande (31) est réparti entre l'essieu avant et l'essieu arrière pour éviter le grincement, la plage de vitesses de déplacement partielles dans laquelle le grincement des freins se produit est déposée dans l'appareil de commande, et, dans la plage de vitesses de déplacement comprise entre 0 et 5 km/h après un freinage du véhicule jusqu'à l'état de repos, le dernier couple de freinage total prédéfini par l'appareil de commande est appliqué soit sur l'essieu avant soit sur l'essieu arrière.

2. Procédé conforme à la revendication 1,
**caractérisé en ce que**
le couple de freinage total est appliqué sur l'essieu moteur.

3. Procédé conforme à la revendication 1 ou 2,
**caractérisé en ce que**
la décélération de freinage nécessaire est déduite par l'appareil de commande (31) de signaux d'un système de régulation (30) de la distance et/ou de la vitesse de déplacement.

4. Procédé conforme à l'une des revendications 1 à 3,
**caractérisé en ce que**
la plage de vitesses de déplacement partielles est déterminée ou fixée spécifiquement au type de véhicule.

5. Procédé conforme à l'une des revendications 1 à 4,
**caractérisé en ce qu'**
en présence d'un couple de freinage total maximum appliqué par un essieu et d'une vitesse de déplacement non nulle, l'appareil de commande (31) reçoit des signaux d'identification d'un roulement ou d'un glissement qui entrainent l'application sur l'essieu jusqu'alors non freiné du couple de freinage permettant l'arrêt du véhicule.
